# EUROPÄISCHE PATENTSCHRIFT

(11) **EP 0 694 277 B1**
(45) Veröffentlichungstag und Bekanntmachung des Hinweises auf die Patenterteilung: **13.08.1997**
(21) Anmeldenummer: 95109374.9
(22) Anmeldetag: 16.06.1995
(51) Int. Cl.: A47J 31/36

(54) **Verfahren zur Regelung einer Pumpe zur Förderung des Wassers in einer Maschine zur Erzeugung von Brühgetränken sowie eine derartige Maschine**
Method for regulating a pump for delivering water to a brewing machine and such a brewing machine
Méthode pour régler une pompe pour délivrer de l'eau dans une machine à faire des infusions, ainsi qu'une telle machine

(30) Priorität: 29.07.1994 DE 4426983; 23.09.1994 DE 9415400 U
(43) Veröffentlichungstag der Anmeldung: 31.01.1996
(73) Patentinhaber: Braun Aktiengesellschaft, Frankfurt am Main (DE)
(72) Erfinder: Schotte, Dietwald, D-65760 Eschborn (DE)

(56) Entgegenhaltungen:
- EP-A- 0 427 666
- DE-U- 7 827 682
- FR-A- 2 295 720
- FR-A- 2 495 923
- US-A- 2 715 868

## Beschreibung

Die vorliegende Erfindung betrifft ein Verfahren zur Steuerung einer Pumpe zur Förderung des Wassers in einer Maschine zur Erzeugung von Brühgetränken (vgl. Oberbegriff des Anspruchs 1) sowie eine derartige Maschine (vgl. Oberbegriff des Anspruchs 5).

Aus der FR-A-2495923 ist eine derartige Kaffeemaschine und Verfahren bekannt, bei der Wasser in einem Wasserbehälter erhitzt wird, und nach Erreichen einer bestimmten Temperatur eine Anzeigelampe eingeschaltet wird. Ein Bediener kann dann einen Schalter betätigen, mit dem eine Pumpe gestartet wird, die das erhitzte Wasser aus dem Wasserbehälter herausfördert und dadurch in an sich bekannter Weise den Kaffee brüht. Wenn der Bediener den Pumpenschalter bereits betätigt, wenn die Anzeigelampe noch nicht brennt, wird der Kaffee mit zu kaltem Wasser zubereitet.

Eine Maschine, die eine solche Fehlbedienung automatisch korrigiert, ist bereits unter der Typenbezeichnung ES-15 bekannt. Bei dieser Maschine wird bei Betätigen eines ersten Schalters die Stromzufuhr zu einer Heizeinrichtung durchgeschaltet. Weiterhin weist diese Maschine eine Pumpe auf, die durch einen separaten Schalter eingeschaltet werden kann. Wird dieser Schalter der Pumpe bereits betätigt, wenn die Heizvorrichtung sich noch in einem kalten Zustand befindet, so läuft die Pumpe noch nicht an. Das Anlaufen der Pumpe erfolgt selbsttätig dann zu diesem Zeitpunkt, wenn die Heizvorrichtung eine bestimmte Temperatur erreicht hat. Von der Pumpe wird dabei kaltes Wasser durch die Heizvorrichtung gefördert, das bei dem Fördern durch die Heizvorrichtung entsprechend erwärmt wird. Nachdem das Wasser aus der Heizvorrichtung austritt, wird es durch den von der Pumpe erzeugten Druck durch das Espressomehl gedrückt und von einem Auffangbehälter, in der Regel einer Tasse, aufgefangen.

Demgegenüber erfolgt die Zuschaltung der Pumpe bei dem Gegenstand der vorliegenden Erfindung auf andere Weise.

Bei der Ausgestaltung des Verfahrens nach Anspruch 1 ergibt sich durch das kennzeichnende Merkmal, daß die Pumpe eindeutig nur zu dem Zeitpunkt anläuft, zu dem der Benutzer die Pumpe startet. Bei einem rückblickenden Vergleich mit dem Stand der Technik zeigt sich also, daß der Benutzer nicht den Schalter für die Pumpe betätigen kann und die Pumpe dann entsprechend später anläuft, wenn die Temperaturbedingung erfüllt ist. Ein Anlaufen der Pumpe ist nur in dem Moment möglich, wenn der Benutzer den Schalter betätigt.

Vorteilhaft wirkt sich dabei aus, daß die Betriebssicherheit einer derartigen Maschine gegenüber dem bekannten Stand der Technik verbessert ist. Der Benutzer kann nämlich beim bekannten Stand der Technik den Schalter der Pumpe betätigen und, weil die Temperaturbedingung noch nicht erfüllt war, läuft die Pumpe dennoch nicht an. Wenn der Benutzer dann beispielsweise die Behälter, in denen das Brühgetränk aufgefangen werden soll, beispielsweise Tassen, durch eine Kanne ersetzen will, und die Hand in dem Moment unter der Austrittsöffnung hat, wenn die Pumpe anläuft, so kann es in dem Moment dann zu Verbrühungen kommen. Demgegenüber ist bei dem Gegenstand der vorliegenden Erfindung sichergestellt, daß die Pumpe unmittelbar nur dann anlaufen kann, wenn der Benutzer den Schalter der Pumpe betätigt hat. Ein für den Benutzer überraschendes Anlaufen der Pumpe ist dadurch ausgeschlossen.

Weiterhin wirkt sich die Anwendung des Verfahrens nach Anspruch 1 vorteilhaft aus, wenn die Brühgetränkemaschine eine Tassenvorwärmung aufweist. Eine derartige Tassenvorwärmung ist vorteilhaft so ausgebildet, daß das Wasser in einem offenen Heizbehälter auf die richtige Betriebstemperatur erwärmt wird. Die Verwendung eines offenen Heizbehälters bedeutet dabei, daß das Wasser bei der Erwärmung nicht unter Druck steht. Ein derartiger offener Behälter weist dabei insbesondere an seiner Oberseite Austrittsöffnungen auf, durch die Wasserdampf austreten kann, der sich beim Erwärmen des Wassers bildet. Eine Tassenvorwärmung erfolgt dabei derart, daß die Tassen beim Erwärmen des Wassers diese Austrittsöffnungen zumindest teilweise überdecken und durch den austretenden Wasserdampf erwärmt werden. Wenn der Benutzer der Maschine die Tassen auf der Oberseite des Heizbehälters zum Vorwärmen positioniert hat und anschließend seine Aufmerksamkeit von der Maschine wegwendet, weil er beispielsweise den Raum verläßt, so wird bei einem selbsttätigen Loslaufen der Maschine nach Erreichen der Temperaturbedingung das Brühgetränk gefördert, obwohl sich kein Auffangbehälter unter der Austrittsöffnung befindet. Mit dem Verfahren nach Anspruch 1 wird daher in vorteilhafter Weise erreicht, daß nur Wasser der richtigen Temperatur gefördert werden kann und daß andererseits kein für den Benutzer überraschendes Loslaufen der Pumpe erfolgen kann. Der Benutzer kann sich daher vor Inbetriebsetzen der Pumpe vergewissern, daß sich ein Auffangbehälter unter der Austrittsöffnung befindet. Dadurch wird dem Benutzer die Vorwärmung von Tassen beim Aufbrühen von Getränken wesentlich erleichtert.

Vorteilhaft wirkt sich bei der Ausgestaltung des Verfahrens gemäß Anspruch 2 aus, daß dem Benutzer angezeigt wird, wenn die Temperaturbedingung erfüllt ist, so daß also für den Benutzer eindeutig erkennbar ist, wann die Pumpe anläuft, wenn er den Schalter der Pumpe betätigt.

Vorteilhaft wirkt sich bei der Ausgestaltung des Verfahrens gemäß Anspruch 3 aus, daß eine eindeutige Temperatur des Wassers beim Anlaufen der Pumpe erreicht ist. Dieser Vorteil kommt insbesondere dann zum Tragen, wenn ein anderes System verwendet wird als das System des gattungsbildenden Standes der Technik. Wenn die Pumpe nämlich kein kaltes Wasser durch eine Heizvorrichtung fördert, sondern wenn das Wasser von einer Heizvorrichtung zunächst auf die entsprechende Temperatur aufgeheizt wird und anschließend von der Pumpe gefördert wird, so daß ein gewisser Druck des Wassers entsteht, ist eine eindeutige Temperatur des Wassers gegeben. Bei dem bekannten Stand der Technik sind die Parameter Temperatur des Wassers und Druck des Wassers nicht unabhängig voneinander einstellbar. Bei Erhöhung der Förderrate der Pumpe steigt der Druck im System und gleichzeitig reduziert sich die Temperatur des Wassers, da aufgrund der Erhöhung der Förderrate die Verweildauer des Wassers in der Heizvorrichtung reduziert wird. Bei der Regelung gemäß dem Stand der Technik ist also keine unabhängige Einstellung von Temperatur und Druck möglich.

Wenn für die Temperatur gleichzeitig ein Maximalwert vorgegeben ist gemäß der Ausbildung des Verfahrens nach Anspruch 4, kann dadurch sichergestellt werden, daß sich die Temperatur des Wassers im optimalen Bereich zur Erzeugung von Espresso befindet. Dieser Temperaturbereich ist dabei zwischen 92 und 94 Grad C gegeben.

Die Maschine gemäß Anspruch 5 beschreibt ein gegenständliches Ausführungsbeispiel, bei dem das Verfahren gemäß Anspruch 1 realisiert ist. Entsprechend dem Vorteil der Ausgestaltung eines Verfahrens nach Anspruch 1 ergibt sich also bei der Maschine gemäß Anspruch 5, daß die Betriebssicherheit dieser Maschine gegenüber dem bekannten Stand der Technik verbessert ist.

Ein Ausführungsbeispiel der Erfindung ist in der Zeichnung dargestellt und wird im folgenden näher beschrieben. Es zeigen dabei:
- Fig. 1: eine Prinzipschaltungsanordnung zur Durchführung des Verfahrens,
- Fig. 2: eine vorteilhafte Anordnung der Pumpe bezogen auf die Heizvorrichtung des Wassers,
- Fig. 3: einen Ablauf des erfindungsgemäßen Verfahrens,
- Fig. 4: einen weiteren Ablauf des erfindungsgemäßen Verfahrens und
- Fig. 5: eine weitere Prinzipschaltungsanordnung zur Durchführung des Verfahrens.

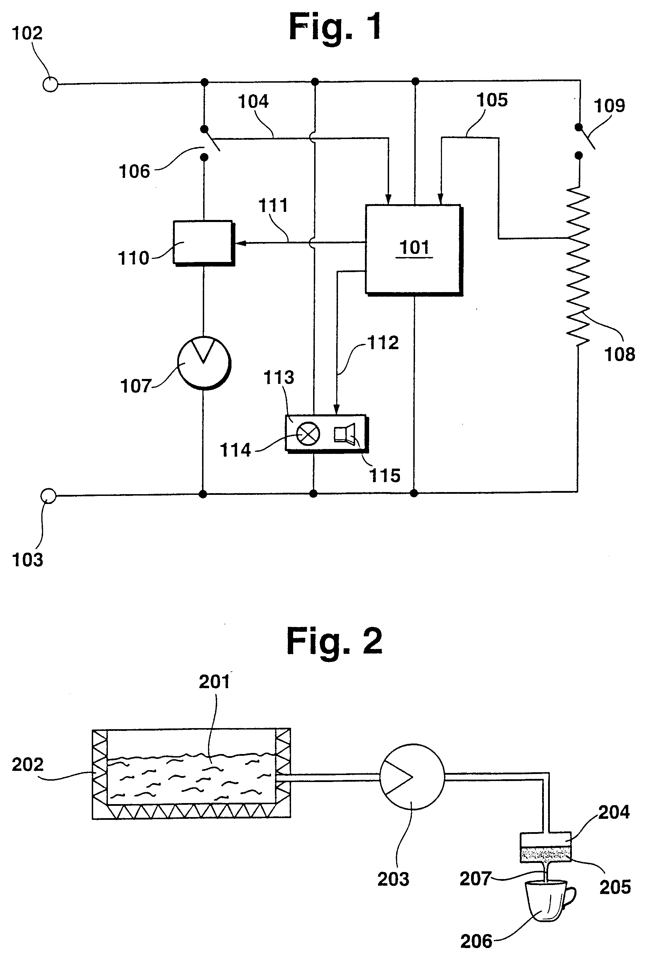

Bei der Darstellung gemäß Fig. 1 wird an die Anschlußklemmen 102 und 103 eine elektrische Spannung angelegt, mittels der ein Mikrokontroller 101 versorgt wird. Diesem Mikrokontroller 101 werden dabei Signale 104 und 105 zugeführt. Das Signal 104 ist dabei ein Signal, das die Stellung eines Schalters 106 anzeigt. Dieser Schalter 106 wird dabei vom Benutzer betätigt, um die Pumpe 107 einzuschalten. Das Signal 105 repräsentiert dabei die Temperatur, die von einem Heizelement 108 ausgeht. Mit dieser Temperatur kann zum einen die Temperatur des Heizelementes 108 selbst gemeint sein oder auch die Temperatur des Wassers, das durch den Stromfluß des Heizelementes 108 aufgewärmt werden soll. Dieses Heizelement 108 ist durch einen Schalter 109 vom Benutzer an die Versorgungsspannung anlegbar. Der Schalter 106 kann dabei ein Schalter sein, der wenigstens zwei Positionen aufweist. Das Signal 104 kann dabei nach Art eines Flip-Flops gebildet werden, indem jede Schalterbetätigung den Wert dieses Flip-Flops, das zwei Werte annehmen kann, entsprechend ändert. Weiterhin ist ein steuerbarer Schalter 110 vorgesehen, der beispielsweise ein Transistor oder auch ein Triac sein kann, der von dem Mikrokontroller 101 über eine Signalleitung 111 ansteuerbar ist. Dieser steuerbare Schalter 110 wird von dem Mikrokontroller 101 zunächst in der offenen Stellung gehalten. Über die Signalleitung 111 wird der steuerbare Schalter 110 nur dann geschlossen, wenn das Signal 104, das eine Betätigung des Schalters 106 in die Position "Pumpe ein" anzeigt, erst dann dem Mikrokontroller 101 zugeführt wird, wenn über die Signalleitung 105 dem Mikrokontroller 101 ein Signal zugeführt wird, aus dem abgeleitet wird, daß die Temperaturbedingung erfüllt ist. Dadurch wird sichergestellt, daß die Pumpe 107 nur dann anlaufen kann, wenn der Benutzer den Schalter 106 betätigt, nachdem die entsprechende Temperaturbedingung erfüllt war.

In vorteilhafter Weise wird in dem Moment, wo die Temperaturbedingung erfüllt ist, über die Signalleitung 112 eine Anzeigevorrichtung 113 angesteuert, die z.B. aus einer optischen Anzeige 114, z.B. einer Lampe, und/oder einer akustischen Anzeige 115 bestehen kann. Die optische Anzeige kann dabei (hier nicht dargestellt) derart ausgebildet werden, daß während der Aufheizphase eine rote Leuchtdiode leuchtet und, wenn die Temperaturbedingung erfüllt ist, eine grüne Leuchtdiode angesteuert wird. Dadurch wird dem Benutzer angezeigt, wenn die Temperaturbedingung erfüllt ist und bei Betätigung des Schalters 106 die Pumpe dann auch tatsächlich anläuft.

Fig. 2 zeigt einen Wasserbehälter 201, der von einer Heizvorrichtung 202 umgeben ist. Diese Heizvorrichtung 202 entspricht der Heizvorrichtung 108 der Fig. 1. Die Pumpe 203 fördert dabei das erhitzte Wasser aus dem Wasserbehälter 201 in den Espressomehlbehälter 204. Das Wasser wird also auf dem Weg zum Espressomehlbehälter 204 durch die Pumpe unter Druck gesetzt und wird mit diesem Druck durch das Espressomehl 205 gefördert. Nachdem das Wasser aus der Austrittsöffnung 207 ausgetreten ist, wird es von dem Auffangbehälter 206 aufgefangen. Vorteilhaft wirkt sich bei dieser Anordnung der Pumpe zwischen dem Espressomehlbehälter 204 und dem Wasserbehälter 201 mit der Heizvorrichtung 202 aus, daß in Verbindung mit dem erfindungsgemäßen Verfahren die Pumpe erst dann anläuft, wenn das Wasser in dem Wasserbehälter 201 eine definierte Temperatur erreicht hat. Die Wassertemperatur kann dabei beispielsweise ermittelt werden, indem die Heizvorrichtung als NTC- oder PTC-Widerstand ausgebildet ist. Die Temperatur ergibt sich dann aus dem Widerstandswert, der wiederum aus dem Strom abgeleitet werden kann, der bei der betreffenden Spannung durch den Widerstand fließt.

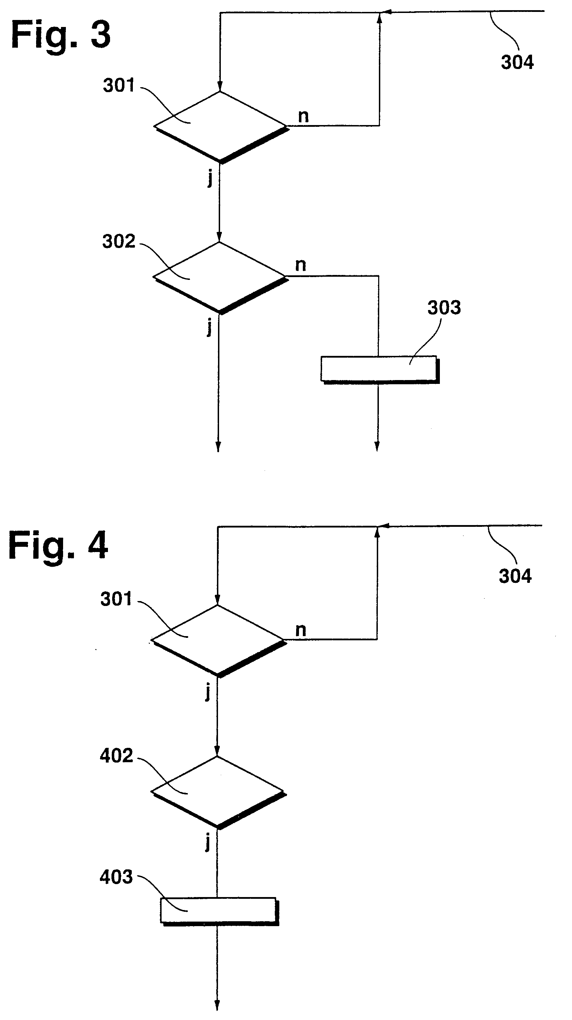

Fig. 3 zeigt einen Ablauf des erfindungsgemäßen Verfahrens. Dieser Ablauf wird entsprechend dem Pfeil 304 dann angesteuert, wenn von dem Benutzer die Heizvorrichtung zugeschaltet wurde. Entsprechend der Darstellung der Fig. 1 bedeutet dies, daß von dem Benutzer der Schalter 109 geschlossen wurde. Der Ablauf des Verfahrens beginnt dann mit einem Schritt 301, in dem überprüft wird, ob die Temperaturbedingung erfüllt ist. Entsprechend den Ausführungen zu Fig. 1 kann diese Temperaturbedingung darin bestehen, daß die Heizvorrichtung selbst eine bestimmte Temperatur erreicht hat oder aber bei einer Anordnung der Pumpe gemäß Fig. 2, daß das Wasser in dem Wasserbehälter 201 eine bestimmte Temperatur erreicht hat. Ist dies nicht der Fall, erfolgt eine Rückkehr zu dem Beginn des Verfahrensablaufes. Bei der Realisierung in einem Mikrokontroller existiert eine bestimmte Taktfrequenz, mit der dieser Programmablauf dann erneut gestartet wird. Wenn entsprechend der Abfrage in dem Schritt 301 festgestellt wurde, daß die Temperaturbedingung erfüllt ist, erfolgt ein Übergang zu dem Schritt 302. In dem Schritt 302 wird dann geprüft, ob der Pumpenschalter von dem Benutzer eingeschaltet wurde. Wenn dies nicht der Fall ist, wird entsprechend dem Schritt 303 der steuerbare Schalter angesteuert. Der Verfahrensablauf wird dann beendet, d.h., daß ab diesem Zeitpunkt durch Betätigen des Pumpenschalters die Pumpe an die Versorgungsspannung anlegbar ist. Bei Betätigung des Pumpenschalters läuft also die Pumpe dann los.

Wenn die Prüfung in dem Schritt 302 bejaht wurde, d.h., daß der Pumpenschalter sich bei Erreichen der Temperaturbedingung bereits in der Stellung "Ein" befindet, wird der Verfahrensablauf unmittelbar unterbrochen. Da in diesem Zustand der steuerbare Schalter 110 noch nicht angesteuert wurde, läuft also in diesem Falle die Pumpe nicht an. Dieser Ablauf des Verfahrens gemäß Fig. 3 erfolgt dann, wenn die Pumpe durch einen Schalter ein- und ausgeschaltet wird, der wenigstens zwei Schaltzustände aufweist.

Handelt es sich jedoch um einen Schalter, dessen Betätigung von einem Mikrokontroller abgefragt wird, und in Abhängigkeit von dessen Betätigung von dem Mikrokontroller wiederum ein ansteuerbarer Schalter angesteuert wird, erfolgt der Ablauf gemäß dem Verfahren nach Fig. 4. Identische Überprüfungen und Verfahrensablaufschritte zu der Beschreibung gemäß Fig. 3 sind dort mit gleichen Bezugszeichen versehen. Auf eine erneute Beschreibung wird im Zusammenhang mit Fig. 4 daher verzichtet.

Wurde die Überprüfung gemäß Schritt 301 bejaht, erfolgt ein Übergang zu dem Schritt 402, in dem überprüft wird, ob eine Betätigung des Schalters 106 vorliegt. Wenn eine derartige Betätigung vorliegt, erfolgt ein Übergang zu dem Schritt 403, in dem der steuerbare Schalter 110 in die Stellung "Ein" betätigt wird. Gleichzeitig wird (in diesem Falle ist der Schalter 106 auch von dem Mikrokontroller ansteuerbar) dieser Schalter 106 ebenfalls von dem Mikrokontroller geschlossen.

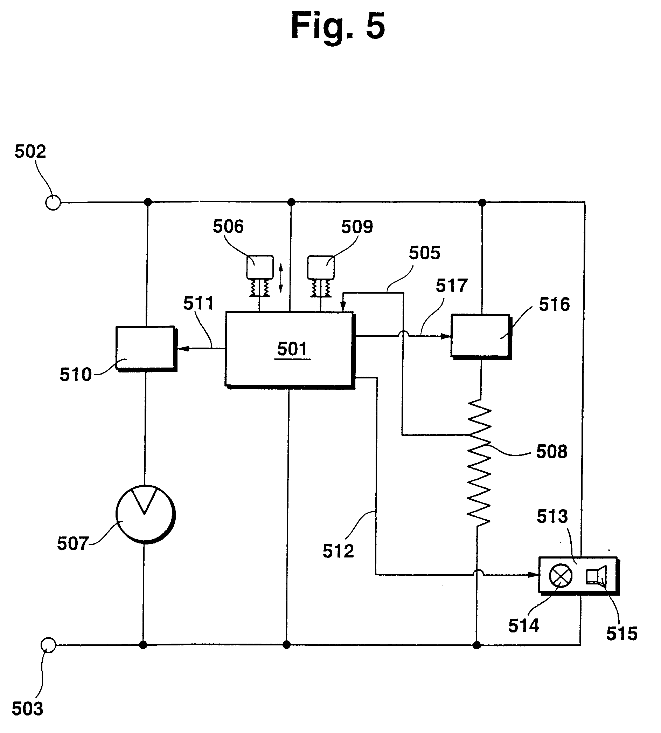

Bei einer derartigen Ausbildung kann der Schalter 106 im Stromkreis der Pumpe auch entfallen. Eine diesbezügliche Prinzipschaltungsanordnung zeigt Fig. 5.

Bei der Darstellung gemäß Fig. 5 wird an die Anschlußklemmen 502 und 503 eine elektrische Spannung angelegt, mittels der ein Mikrokontroller 501 versorgt wird. Diesem Mikrokontroller 501 werden dabei mittels der Taster 506 und 509 sowie über die Signalleitung 505 Signale zugeführt. Der Taster 506 wird dabei vom Benutzer betätigt, um die Pumpe 507 ein- und auszuschalten. Der Mikrokontroller 501 fragt ab, ob der Taster 506 betätigt wurde. Ist dies der Fall, kann von dem Mikrokontroller über die Signalleitung 511 ein steuerbarer Schalter 510 angesteuert werden, durch den die Pumpe 507 dann ein- bzw. ausgeschaltet wird. Das Signal 505 repräsentiert die Temperatur, die von einem Heizelement 508 ausgeht. Mit dieser Temperatur kann zum einen die Temperatur des Heizelementes 508 selbst gemeint sein oder auch die Temperatur des Wassers, das durch den Stromfluß des Heizelementes 508 aufgewärmt werden soll. Dieses Heizelement 508 ist durch Betätigung eines Tasters 509 vom Benutzer an die Versorgungsspannung anlegbar. Von dem Mikrokontroller 501 wird bei Betätigung des Tasters 509 über die Signalleitung 517 ein steuerbarer Schalter 516 geöffnet bzw. geschlossen. Der steuerbare Schalter 510 sowie auch der steuerbare Schalter 516 können beispielsweise ein Transistor oder auch ein Triac sein.

Der steuerbare Schalter 510 wird von dem Mikrokontroller 501 zunächst in der offenen Stellung gehalten. Über die Signalleitung 511 wird der steuerbare Schalter 510 nur dann geschlossen, wenn die Betätigung des Tasters 506 erst dann erfolgt, wenn über die Signalleitung 505 dem Mikrokontroller 501 ein Signal zugeführt wird, aus dem abgeleitet wird, daß die Temperaturbedingung erfüllt ist. Dadurch wird sichergestellt, daß die Pumpe 507 nur dann anlaufen kann, wenn der Benutzer den Taster 506 betätigt, nachdem die entsprechende Temperaturbedingung erfüllt war.

In vorteilhafter Weise wird in dem Moment, wo die Temperaturbedingung erfüllt ist, über die Signalleitung 512 eine Anzeigevorrichtung 513 angesteuert, die z.B. aus einer optischen Anzeige 514, z.B. einer Lampe, und/oder einer akustischen Anzeige 515 bestehen kann. Die optische Anzeige kann dabei (hier nicht dargestellt) derart ausgebildet werden, daß während der Aufheizphase eine rote Leuchtdiode leuchtet und, wenn die Temperaturbedingung erfüllt ist, eine grüne Leuchtdiode angesteuert wird. Dadurch wird dem Benutzer angezeigt, wenn die Temperaturbedingung erfüllt ist und bei Betätigung des Tasters 506 die Pumpe dann auch tatsächlich anläuft.

## Patentansprüche

1. Verfahren zur Steuerung einer Pumpe zur Förderung des Wassers bei einer Maschine zur Erzeugung von Brühgetränken, insbesondere Espresso, Kaffee, Cappuccino, etc. bei dem das Wasser solange erhitzt wird, bis eine Temperaturbedingung erfüllt ist, und ein Schalter bzw. Taster (106, 506) betätigt wird, um die Pumpe (107, 507, 203) zu starten, wobei die Pumpe (107, 507, 203) dann gestartet wird, wenn sowohl eine Temperaturbedingung erfüllt ist als auch eine Betätigung des Schalters bzw. Tasters (106, 506) erfolgt ist,
**dadurch gekennzeichnet**,
daß nach dem Betätigen des Schalters bzw. Tasters (106, 506) zunächst geprüft wird, ob die Temperaturbedingung erfüllt ist, und
daß bei erfüllter Temperaturbedingung die Pumpe (107, 507, 203) dann gestartet wird, jedoch bei nicht erfüllter Temperaturbedingung die Pumpe (107, 507, 203) nicht gestartet wird.

2. Verfahren nach Anspruch 1,
**dadurch gekennzeichnet**,
daß dem Benutzer über eine optische und/oder akustische Anzeigevorrichtung (113, 513, 114, 115, 514, 515) mitgeteilt wird, wenn die Temperaturbedingung erfüllt ist (301).

3. Verfahren nach Anspruch 1 oder 2,
**dadurch gekennzeichnet**,
daß die Temperaturbedingung (301) dadurch gegeben ist, daß das Wasser eine Mindesttemperatur erreicht hat.

4. Verfahren nach Anspruch 3,
**dadurch gekennzeichnet**,
daß die Temperaturbedingung (301) weiterhin dadurch gegeben ist, daß die Temperatur des Wassers kleiner ist als ein vorgebbarer Maximalwert.

5. Maschine zur Erzeugung von Brühgetränken, insbesondere Espresso, Kaffee, Cappuccino, mit
einer Heizvorrichtung (108; 202; 508) zum Erhitzen des Wassers,
einer Pumpe (107; 203; 507) zur Förderung des Wassers,
einem Schalter bzw. Taster (106, 506) zum Starten der Pumpe (107; 203; 507),
**dadurch gekennzeichnet**,
daß die Maschine ferner eine Einrichtung zum Prüfen enthält, ob eine Temperaturbedingung erfüllt ist, und die Pumpe (107, 507, 203) nur dann startet, wenn die Betätigung des Schalters bzw. Tasters (106, 506) erfolgt ist, nachdem die Temperaturbedingung erfüllt war.

6. Maschine nach Anspruch 5,
**dadurch gekennzeichnet**,
daß sie ferner einen Mikrokontroller (101; 501), dem ein Temperatursignal (105; 505) und ein Signal (104) des Schalters bzw. Tasters (106; 506) zuführbar ist, sowie einen steuerbaren Schalter (110; 510) zum Starten der Pumpe (107; 203; 507) enthält, der vom Mikrokontroller (101; 501) ansteuerbar ist.

## Claims

1. A method of controlling a pump for delivering the water in an apparatus for the production of brewed beverages, in particular espresso, coffee, cappuccino, etc., in which the water is heated until a temperature requirement is satisfied, and in which a switch or a push button (106, 506) is actuated to start the pump (107, 507, 203), said pump (107, 507, 203) being started both when a temperature requirement is satisfied and when said switch or push button (106, 506) is actuated,
**characterized in that,** following actuation of said switch or push button (106, 506), a check is first made to see whether the temperature requirement is satisfied,
and that, if the temperature requirement is satisfied, said pump (107, 507, 203) is started, whilst, if the temperature requirement is not satisfied (301), said pump (107, 507, 203) is not started.

2. The method as claimed in claim 1,
**characterized in that** a visual and/or audible annunciator device (113, 513, 114, 115, 514, 515) informs the user of when the temperature requirement is met (301).

3. The method as claimed in claim 1 or claim 2,
**characterized in that** the temperature requirement (301) is met when the water has reached a minimum temperature.

4. The method as claimed in claim 3,
**characterized in that** the temperature requirement (301) is further met when the temperature of the water is lower than a predeterminable maximum value.

5. A machine for the production of brewed beverages, in particular espresso, coffee, cappuccino, with
a heating device (108; 202; 508) for heating the water,
a pump (107; 203; 507) for delivering the water,
a switch or push button (106, 506) for starting the pump (107; 203; 507),
**characterized in that** the machine further includes a checking device to see whether a temperature requirement is satisfied, and that said pump (107, 507, 203) is started only if said switch or push button (106, 506) is actuated after the temperature requirement was met.

6. A machine as claimed in claim 5,
**characterized in that** the machine further includes a microcontroller (101; 501) adapted to receive a temperature signal (105; 505) and a signal (104) from the switch or push button (106; 506), as well as a switching device (110; 510) for starting the pump (107; 203; 507), said switching device being controllable by the microcontroller (101; 501).

## Revendications

1. Procédé de commande d'une pompe pour le transport de l'eau dans le cas d'une machine pour faire des infusions, en particulier expresso, café, cappuccino, etc., dans le cas duquel on chauffe l'eau jusqu'à ce qu'une condition température soit remplie et on manoeuvre un interrupteur ou une touche (106, 506) pour démarrer la pompe (107, 507, 203), procédé dans lequel la pompe (107, 507, 203) ne démarre que si à la fois une condition de température est remplie et il se fait une manoeuvre de l'interrupteur ou de la touche (106, 506),
caractérisé
par le fait qu'après la manoeuvre de l'interrupteur ou de la touche (106, 506), il est tout d'abord vérifié si la condition de température est remplie, et
que, si la condition de température est remplie, la pompe (107, 507, 203) démarre alors mais que toutefois si la condition de température n'est pas remplie la pompe (107, 507, 203) ne démarre pas.

2. Procédé selon la revendication 1,
caractérisé
par le fait qu'il est communiqué à l'utilisateur, par l'intermédiaire d'un dispositif de signalisation optique et/ou acoustique (117, 513, 115, 514, 515), que la condition de température est remplie (301).

3. Procédé selon la revendication 1 ou 2,
caractérisé
par le fait que la condition de température (301) est définie par le fait que l'eau a atteint une température minimale.

4. Procédé selon la revendication 3,
caractérisé
par le fait que la condition de température (301) est en outre définie par le fait que la température de l'eau est inférieure à une valeur maximale que l'on peut prescrire.

5. Machine pour faire des infusions en particulier expresso, café cappuccino, comportant
un dispositif de chauffage (108; 202; 508) pour chauffer l'eau,
une pompe (107; 203; 507) pour transporter l'eau,
un interrupteur ou une touche (106, 506) pour démarrer la pompe (107; 203; 507),
caractérisée
par le fait que la machine contient en outre un dispositif pour vérifier si une condition de température est remplie et que la pompe (107, 507, 203) ne démarre que si la manoeuvre de l'interrupteur ou de la touche (106, 506) se fait après que la condition de température a été remplie.

6. Machine selon la revendication 5,
caractérisée
par le fait qu'elle comporte en outre un micro-organe de commande (101; 501) auquel sont amenés un signal de température (105, 505) et un signal (104) de l'interrupteur ou de la touche (106; 506), ainsi que, pour démarrer la pompe (107; 203; 507), un commutateur (110; 510) qui peut être commandé par le micro-organe de commande (101; 501).
